# EUROPEAN PATENT APPLICATION

(11) **EP 4 151 928 A1**
(43) Date of publication of application: **22.03.2023**
(21) Application number: 20935970.2
(22) Date of filing: 11.05.2020
(51) Int. Cl.: F25B 43/00

(54) **ACCUMULATOR AND REFRIGERATION CYCLE DEVICE**

(71) Applicant: MITSUBISHI ELECTRIC CORPORATION, Chiyoda-ku Tokyo 100-8310 (JP)
(72) Inventor: HIGASHIIUE, Shinya, Tokyo 100-8310 (JP); TSUKIYAMA, Ryo, Tokyo 100-8310 (JP)
(74) Representative: Pfenning, Meinig & Partner mbB
(86) International application number: PCT/JP2020/018845
(87) International publication number: WO 2021/229649

(57) **Abstract**

An accumulator (10, 10A, 10B, 10C) is an accumulator disposed between an evaporator and a refrigerant suction port of a compressor (101) in a refrigerant circuit of a refrigeration cycle apparatus (100). The accumulator includes: a container (13); an inflow pipe (11) having a first opening end (11E) disposed in the container, the inflow pipe introducing, into the container, refrigerant flowing out from the evaporator; and an outflow pipe (12) having a second opening end (12E) disposed in the container, the outflow pipe supplying refrigerant in the container to the compressor. The container includes an inner circumferential surface (14) that extends along a vertical direction and a circumferential direction, and a concave surface (15) that is concave with respect to the inner circumferential surface and extends along the circumferential direction. A part of the concave surface in the circumferential direction is disposed to face the first opening end.

## Description

### TECHNICAL FIELD

The present disclosure relates to an accumulator and a refrigeration cycle apparatus.

### BACKGROUND ART

There has been known an accumulator that separates gas-liquid two-phase refrigerant into gas-phase refrigerant and liquid-phase refrigerant (gas-liquid separation) and stores the liquid-phase refrigerant in a refrigeration cycle apparatus.

Japanese Patent Laying-Open No. 2014-088990 (PTL 1) discloses an accumulator including a body that stores refrigerant, and a refrigerant inflow hole and a refrigerant outflow hole that longitudinally pass through a header disposed above the body. An introduction pipe that ejects the refrigerant onto an inner circumferential surface of the body as a swirling flow is connected to the refrigerant inflow hole.

The accumulator in PTL 1 includes a double pipe composed of an inner pipe coupled to the refrigerant outflow hole and an outer pipe disposed outside the inner pipe. An opening of the outer pipe is disposed above an opening of the inner pipe and below an ejection port of the introduction pipe. The above-described accumulator further includes a tubular member that is disposed to cover the opening of the outer pipe and opens downward. The ejection port of the introduction pipe is disposed between an outer circumferential surface of the tubular member and the inner circumferential surface of the body.

### CITATION LIST

### PATENT LITERATURE

PTL 1: Japanese Patent Laying-Open No. 2014-088990

### SUMMARY OF INVENTION

### TECHNICAL PROBLEM

As described above, the accumulator in PTL 1 includes a relatively complicated configuration in order to suppress an outflow of liquid-phase refrigerant.

A main object of the present disclosure is to provide an accumulator that can suppress an outflow of liquid-phase refrigerant with a relatively simple configuration.

### SOLUTION TO PROBLEM

An accumulator according to the present disclosure is an accumulator disposed between an evaporator and a refrigerant suction port of a compressor in a refrigerant circuit of a refrigeration cycle apparatus. The accumulator includes: a container; an inflow pipe having a first opening end disposed in the container, the inflow pipe introducing, into the container, refrigerant flowing out from the evaporator; and an outflow pipe having a second opening end disposed in the container, the outflow pipe supplying refrigerant in the container to the compressor. The container includes an inner circumferential surface that extends along a vertical direction and a circumferential direction, and a concave surface that is concave with respect to the inner circumferential surface and extends along the circumferential direction. A part of the concave surface in the circumferential direction is disposed to face the first opening end.

### ADVANTAGEOUS EFFECTS OF INVENTION

According to the present disclosure, there can be provided an accumulator that can suppress an outflow of liquid-phase refrigerant with a relatively simple configuration.

### BRIEF DESCRIPTION OF DRAWINGS

Fig. 1 shows a refrigerant circuit of a refrigeration cycle apparatus according to a first embodiment.
Fig. 2 is a side view of an accumulator according to the first embodiment.
Fig. 3 is a top view when viewed from an arrow III in Fig. 2.
Fig. 4 is a cross-sectional view when viewed from a line IV-IV in Fig. 3.
Fig. 5 is a cross-sectional view when viewed from a line V-V in Fig. 3.
Fig. 6 is a side view of an accumulator according to a second embodiment.
Fig. 7 is a top view when viewed from an arrow VII in Fig. 6.
Fig. 8 is a cross-sectional view when viewed from a line VIII-VIII in Fig. 7.
Fig. 9 is a cross-sectional view when viewed from a line IX-IX in Fig. 7.
Fig. 10 is a side view of an accumulator according to a third embodiment.
Fig. 11 is a top view when viewed from an arrow XI in Fig. 10.
Fig. 12 is a cross-sectional view when viewed from a line XII-XII in Fig. 10.
Fig. 13 is a cross-sectional view when viewed from a line XIII-XIII in Fig. 11.
Fig. 14 is a cross-sectional view when viewed from a line XIV-XIV in Fig. 11.
Fig. 15 is a top view of an accumulator according to a fourth embodiment.
Fig. 16 is a cross-sectional view of the accumulator shown in Fig. 15, which is perpendicular to a vertical direction.
Fig. 17 is a cross-sectional view showing a modification of the accumulator according to the first embodiment.

### DESCRIPTION OF EMBODIMENTS

Embodiments of the present disclosure will be described hereinafter with reference to the drawings, in which the same or corresponding portions are denoted by the same reference numerals and description thereof will not be repeated.

### First Embodiment

### <Configuration of Refrigeration Cycle Apparatus>

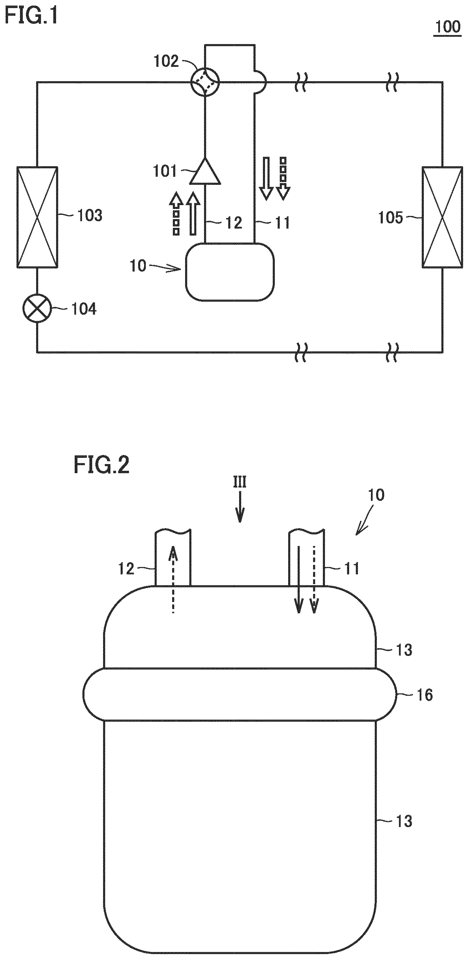

As shown in Fig. 1, a refrigeration cycle apparatus 100 according to a first embodiment includes a refrigerant circuit in which refrigerant circulates. The refrigerant circuit includes a compressor 101, a four-way valve 102 serving as a flow path switching portion, an outdoor heat exchanger 103, a decompressing apparatus 104, an indoor heat exchanger 105, and an accumulator 10. Refrigeration cycle apparatus 100 is, for example, an air conditioner.

Compressor 101 includes a discharge port through which the refrigerant is discharged, and a suction port through which the refrigerant is suctioned. Decompressing apparatus 104 is, for example, an expansion valve. Accumulator 10 includes an inflow pipe 11 into which the refrigerant flows, and an outflow pipe 12 from which the refrigerant flows out. Outflow pipe 12 is connected to the discharge port of compressor 101.

Four-way valve 102 includes a first port connected to the discharge port of compressor 101, a second port connected to inflow pipe 11 of accumulator 10, a third port connected to outdoor heat exchanger 103, and a fourth port connected to indoor heat exchanger 105. Four-way valve 102 is provided to perform switching between a first state in which outdoor heat exchanger 103 functions as a condenser and indoor heat exchanger 105 functions as an evaporator, and a second state in which indoor heat exchanger 105 functions as a condenser and outdoor heat exchanger 103 functions as an evaporator. When refrigeration cycle apparatus 100 is an air conditioner, the first state is implemented at the time of cooling operation and the second state is implemented at the time of heating operation. In the first state and the second state, accumulator 10 is disposed between an evaporator and the suction port of compressor 101, and a flow direction of the refrigerant in accumulator 10 is constant.

### <Configuration of Accumulator>

As shown in Figs. 2 to 5, accumulator 10 mainly includes inflow pipe 11, outflow pipe 12 and a container 13. A vertical direction, a circumferential direction and a radial direction are defined in accumulator 10. Outflow pipe 12 is disposed in an upper part of container 13. That is, the vertical direction refers to a direction in which outflow pipe 12 and container 13 are arranged. The circumferential direction refers to a direction in which a side surface portion of container 13 extends, when accumulator 10 is viewed from above. The radial direction refers to a direction from a center toward the side surface portion of container 13, when accumulator 10 is viewed from above. In Figs. 2 to 5, a dotted line arrow 201 indicates a flow direction of gas-phase refrigerant, and a solid line arrow 202 indicates a flow direction of liquid-phase refrigerant.

Inflow pipe 11 is a pipe for gas-phase refrigerant or gas-liquid two-phase refrigerant flowing out from the evaporator to flow into container 13. Inflow pipe 11 has a first opening end 11E disposed in container 13. Inflow pipe 11 includes, for example, a first pipe portion 11A extending along the vertical direction and passing through an upper surface portion of container 13, and a second pipe portion 11B connected to a lower end of first pipe portion 11A and extending in a direction that crosses the vertical direction. In other words, inflow pipe 11 includes a bent portion in container 13. In this case, second pipe portion 11B has first opening end 11E. Inflow pipe 11 may, for example, pass through the side surface portion of container 13.

Outflow pipe 12 is a pipe for gas-phase refrigerant in container 13 to flow out to the suction port of compressor 101. Outflow pipe 12 has a second opening end 12E disposed in container 13. When viewed from above, outflow pipe 12 is, for example, formed symmetrically to first pipe portion 11A of inflow pipe 11 with respect to a central axis of container 13 extending in the vertical direction.

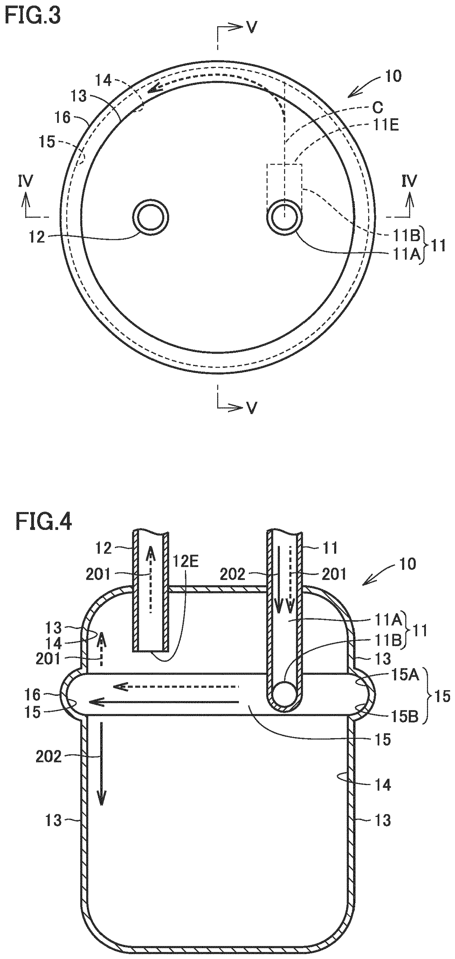

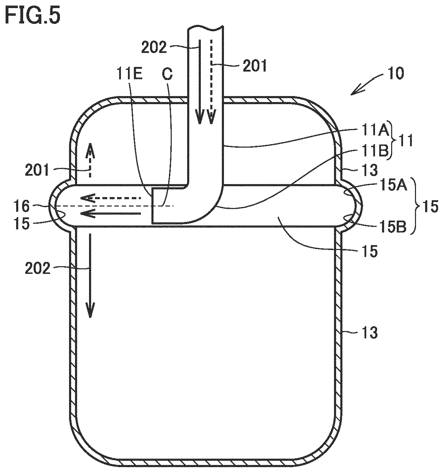

As shown in Figs. 4 and 5, first opening end 11E and second opening end 12E are disposed between the upper surface portion and a lower surface portion of container 13 in the vertical direction. Second opening end 12E of container 13 is, for example, disposed at a higher position than first opening end 11E. First opening end 11E faces outward with respect to the above-described central axis. Second opening end 12E faces downward, for example.

As shown in Figs. 4 and 5, container 13 is a tubular member, and is, for example, a cylindrical member. Container 13 includes an inner circumferential surface 14 that extends along the vertical direction and the circumferential direction, and a concave surface 15 that is concave with respect to inner circumferential surface 14 and extends along the circumferential direction. Concave surface 15 is, for example, formed to be continuous over the entire circumference in the circumferential direction. Concave surface 15 is, for example, formed above the center of container 13 in the vertical direction. Concave surface 15 is disposed above a center of inner circumferential surface 14 in the vertical direction. In accumulator 10, the inside of container 13 and the outside of accumulator 10 in the refrigerant circuit are, for example, connected only by inflow pipe 11 and outflow pipe 12.

As shown in Figs. 4 and 5, concave surface 15 includes a first inclined surface 15A extending along the circumferential direction and inclined outward as first inclined surface 15A extends downward, and a second inclined surface 15B extending along the circumferential direction and inclined inward as second inclined surface 15B extends downward. First inclined surface 15A is disposed above second inclined surface 15B. A lower end of first inclined surface 15A is continuous to an upper end of second inclined surface 15B. The lower end of first inclined surface 15A is in contact with the upper end of second inclined surface 15B. The lower end of first inclined surface 15A may be continuous to the upper end of second inclined surface 15B through an inner circumferential surface extending along the vertical direction and the circumferential direction and having an inner diameter larger than that of inner circumferential surface 14.

As shown in Figs. 4 and 5, each of cross-sectional shapes of first inclined surface 15A and second inclined surface 15B that are perpendicular to the circumferential direction has, for example, an arc shape. The cross-sectional shapes of first inclined surface 15A and second inclined surface 15B that are perpendicular to the circumferential direction are, for example, symmetric with respect to a center of concave surface 15 in the vertical direction. A connection portion that connects the lower end of first inclined surface 15A and the upper end of second inclined surface 15B is, for example, disposed at the center of concave surface 15 in the vertical direction. A cross-sectional shape of concave surface 15 that is perpendicular to the circumferential direction has, for example, a C shape, a U shape or a semicircular shape. Each of the cross-sectional shapes of first inclined surface 15A and second inclined surface 15B that are perpendicular to the circumferential direction may have, for example, a linear shape. The cross-sectional shape of concave surface 15 that is perpendicular to the circumferential direction may have, for example, a V shape.

As shown in Figs. 3 and 5, a part of concave surface 15 in the circumferential direction is disposed to face first opening end 11E. A part of each of first inclined surface 15A and second inclined surface 15B in the circumferential direction is disposed to face first opening end 11E. An imaginary straight line C (see Fig. 5) passing through a center of first opening end 11E and extending along a direction perpendicular to first opening end 11E intersects with a part of concave surface 15 in the circumferential direction. Above-described imaginary straight line C intersects with a center, in the vertical direction, of a part of concave surface 15 in the circumferential direction, for example. Above-described imaginary straight line C intersects with a part, in the circumferential direction, of the connection portion that connects the lower end of first inclined surface 15A and the upper end of second inclined surface 15B, for example. Above-described imaginary straight line C is, for example, along a horizontal direction.

As shown in Fig. 4, first inclined surface 15A of concave surface 15 is disposed below second opening end 12E. Second opening end 12E is disposed above first inclined surface 15A of concave surface 15.

As shown in Fig. 5, a width of concave surface 15 in the vertical direction is wider than a maximum width of first opening end 11E. Each of widths of first inclined surface 15A and second inclined surface 15B in the vertical direction is, for example, narrower than the maximum width of first opening end 11E.

As shown in Figs. 4 and 5, concave surface 15 is disposed radially outward of an outer circumferential surface located on the opposite side of inner circumferential surface 14. A width of concave surface 15 in the radial direction is, for example, wider than a half of the maximum width of first opening end 11E. The width of concave surface 15 in the radial direction is, for example, wider than a half of the maximum width of first opening end 11E.

As shown in Figs. 2 to 5, concave surface 15 is, for example, formed as an inner circumferential surface of a convex portion 16 that protrudes from the outer circumferential surface of container 13.

### <Function and Effect>

In accumulator 10, gas-liquid two-phase refrigerant flows into container 13 through first opening end 11E of inflow pipe 11. The gas-liquid two-phase refrigerant having flown into container 13 collides with a part of concave surface 15 in the circumferential direction that is disposed to face first opening end 11E, and then, swirls in the circumferential direction on concave surface 15 under the centrifugal force. In this state, the gas-liquid two-phase refrigerant includes gas-phase refrigerant and liquid-phase refrigerant that is present as droplets in the gas-phase refrigerant. The centrifugal force and gravity force that act on the liquid-phase refrigerant having a high density are greater than the centrifugal force and gravity force that act on the gas-phase refrigerant having a low density. Therefore, when the gas-liquid two-phase refrigerant flows on concave surface 15 along the circumferential direction, gas-liquid separation is implemented.

The liquid-phase refrigerant (droplets) having collided with first inclined surface 15A that faces first opening end 11E flows on first inclined surface 15A in the circumferential direction. The liquid-phase refrigerant flowing on first inclined surface 15A in the circumferential direction flows downward gradually under the action of centrifugal force and gravity force, and reaches the lower end of first inclined surface 15A. A flow velocity of the liquid-phase refrigerant decreases while the liquid-phase refrigerant is flowing on concave surface 15, and thus, the centrifugal force that acts on the liquid-phase refrigerant also decreases gradually. As a result, the liquid-phase refrigerant flowing on first inclined surface 15A in the circumferential direction finally reaches second inclined surface 15B under the action of gravity force.

The liquid-phase refrigerant having collided with second inclined surface 15B that faces first opening end 11E and the liquid-phase refrigerant having flown from first inclined surface 15A to second inclined surface 15B flow on second inclined surface 15B in the circumferential direction while relatively large centrifugal force is acting. However, with the decrease in flow velocity, the liquid-phase refrigerant flows downward and finally reaches inner circumferential surface 14 disposed below second inclined surface 15B under the action of gravity force.

The liquid-phase refrigerant having reached inner circumferential surface 14 flows downward along inner circumferential surface 14 and stays in container 13.

In this way, in accumulator 10, the liquid-phase refrigerant that is present as droplets is separated and removed from the gas-liquid two-phase refrigerant, and only the gas-phase refrigerant flows out from outflow pipe 12 to the outside of accumulator 10.

Therefore, accumulator 10 can suppress an outflow of the liquid-phase refrigerant with a relatively simple configuration.

In accumulator 10, the lower end of first inclined surface 15A is continuous to the upper end of second inclined surface 15B. Therefore, the efficiency of gas-liquid separation is higher, as compared with when the lower end of first inclined surface 15A is not continuous to the upper end of second inclined surface 15B.

In accumulator 10, second opening end 12E is disposed above concave surface 15. Therefore, the droplets are less likely to flow into second opening end 12E, as compared with when second opening end 12E is disposed below concave surface 15.

In refrigeration cycle apparatus 100 including accumulator 10, an outflow of the liquid-phase refrigerant from accumulator 10 to compressor 101 is suppressed. Therefore, dilution of a refrigeration oil in compressor 101 by the liquid-phase refrigerant is less likely to occur, and burning of a sliding portion of compressor 101 is suppressed. As a result, refrigeration cycle apparatus 100 shows high reliability.

### Second Embodiment

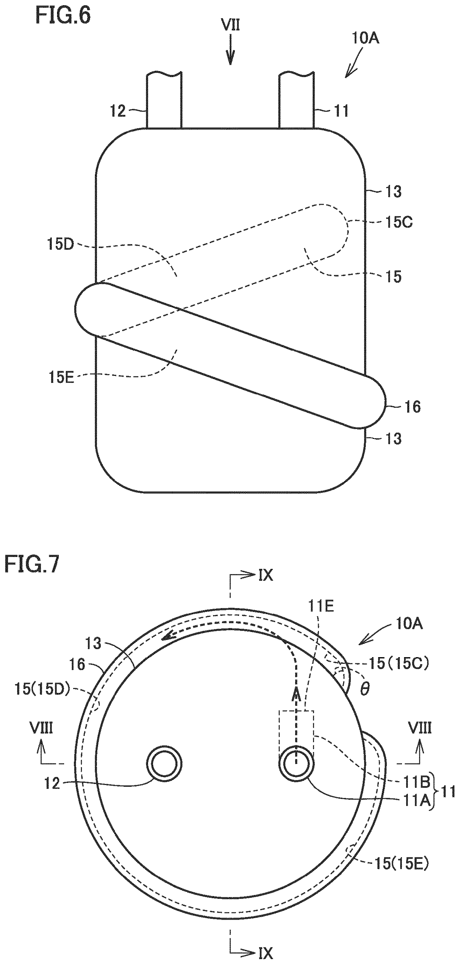

As shown in Figs. 6 to 9, an accumulator 10A according to a second embodiment is configured basically similarly to accumulator 10 according to the first embodiment. However, accumulator 10A according to the second embodiment is different from accumulator 10 in that concave surface 15 is formed helically.

Concave surface 15 includes a first portion 15C disposed to face first opening end 11E, a second portion 15D that is continuous to first portion 15C and is formed to extend downward with increasing distance from first portion 15C in the circumferential direction, and a third portion 15E that is continuous to second portion 15D and is formed to extend downward with increasing distance from a lower end of second portion 15D in the circumferential direction. Each of first portion 15C, second portion 15D and third portion 15E includes first inclined surface 15A and second inclined surface 15B. First inclined surface 15A and second inclined surface 15B are continuous in each of first portion 15C, second portion 15D and third portion 15E.

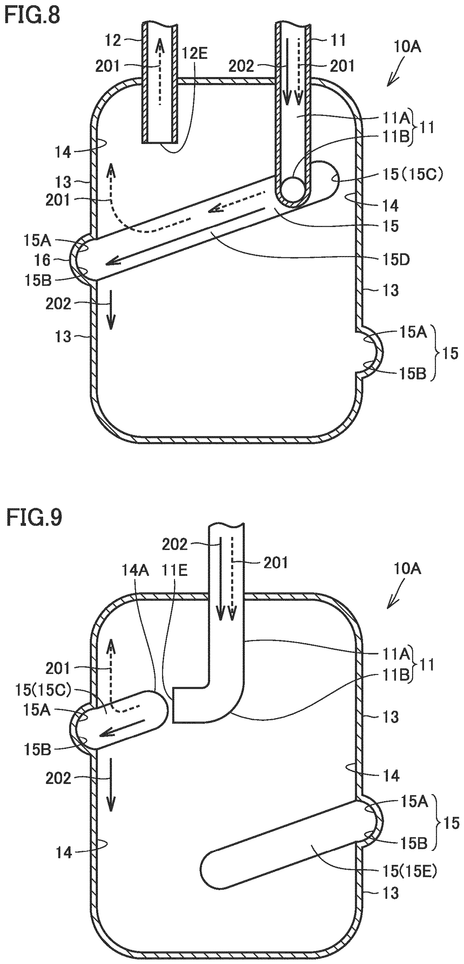

As shown in Fig. 7, when viewed from above, each of first portion 15C and third portion 15E is gradually gently inclined inward toward an end in the circumferential direction, and is connected to inner circumferential surface 14. When viewed from above, an inclination angle θ formed by first portion 15C and a tangent line of inner circumferential surface 14 passing through a connection portion that connects first portion 15C and inner circumferential surface 14 is larger than 0 degree and smaller than 90 degrees. As shown in Figs. 7 and 9, a lower end of third portion 15E is, for example, disposed to be spaced apart from first portion 15C of concave surface 15 in the circumferential direction. Third portion 15E may, for example, be disposed to overlap with first portion 15C of concave surface 15, when viewed from above.

Since accumulator 10A is configured basically similarly to accumulator 10, accumulator 10A can produce an effect similar to that of accumulator 10.

In accumulator 10A, the liquid-phase refrigerant flows downward under the action of centrifugal force in addition to the action of gravity force. Therefore, the efficiency of gas-liquid separation is higher than that of accumulator 10.

### Third Embodiment

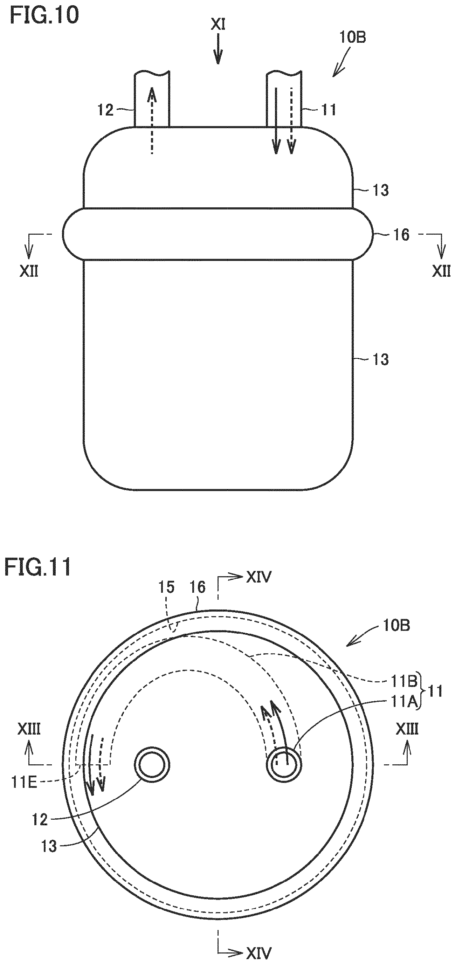

As shown in Figs. 10 to 14, an accumulator 10B according to a third embodiment is configured basically similarly to accumulator 10 according to the first embodiment. However, accumulator 10B according to the third embodiment is different from accumulator 10 in that inflow pipe 11 includes a bent pipe portion 11C extending along concave surface 15 in container 13.

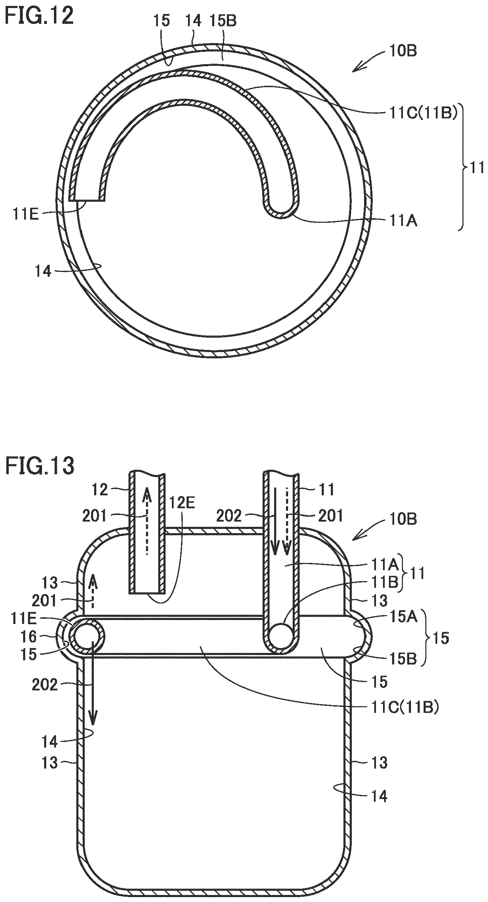

Bent pipe portion 11C is, for example, formed by at least a part of above-described second pipe portion 11B. Bent pipe portion 11C has first opening end 11E. As shown in Figs. 11 and 12, first opening end 11E is, for example, disposed along the radial direction of container 13, when viewed from the vertical direction. An inner circumferential surface of bent pipe portion 11C includes a portion located inward in the above-described radial direction, and a portion located outward in the above-described radial direction.

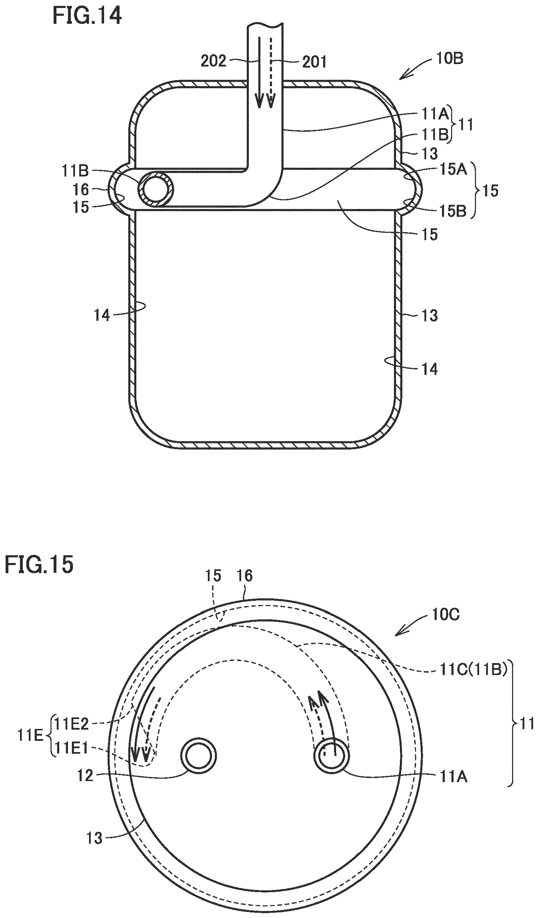

As shown in Figs. 13 and 14, a width of bent pipe portion 11C in the vertical direction is narrower than the width of concave surface 15 in the vertical direction. The width of bent pipe portion 11C in the vertical direction is, for example, wider than each of the widths of first inclined surface 15A and second inclined surface 15B in the vertical direction.

A portion of first opening end 11E located on the most outer circumferential side in the above-described radial direction is, for example, disposed in a space surrounded by concave surface 15 and located outside of inner circumferential surface 14.

When viewed from the vertical direction, first opening end 11E is, for example, disposed between outflow pipe 12 and concave surface 15. When viewed from the vertical direction, first opening end 11E is, for example, disposed to align with a center of outflow pipe 12 in the above-described radial direction. A shortest distance between a portion of first opening end 11E located on the outer circumferential side in the above-described radial direction and concave surface 15 is shorter than a shortest distance between a portion of first opening end 11E located on the outer circumferential side in the above-described radial direction and concave surface 15.

Since accumulator 10B is configured basically similarly to accumulator 10, accumulator 10B can produce an effect similar to that of accumulator 10.

In accumulator 10B, gas-liquid separation is also performed in bent pipe portion 11C of inflow pipe 11 prior to gas-liquid separation on concave surface 15. Therefore, in accumulator 10B, the efficiency of gas-liquid separation is higher than that of accumulator 10.

Specifically, in bent pipe portion 11C of inflow pipe 11, the liquid-phase refrigerant gradually flows outside in the above-described radial direction under the action of centrifugal force, and flows into container 13 from the portion of first opening end 11E located on the outer circumferential side in the above-described radial direction. In contrast, as compared with the liquid-phase refrigerant, the gas-phase refrigerant flows inside in the above-described radial direction under the action of centrifugal force, and flows out to container 13 from the portion of first opening end 11E located on the inner circumferential side in the above-described radial direction.

Furthermore, the shortest distance between the portion of first opening end 11E located on the outer circumferential side in the above-described radial direction and concave surface 15 is shorter than the shortest distance between the portion of first opening end 11E located on the outer circumferential side in the above-described radial direction and concave surface 15. Therefore, the liquid-phase refrigerant is more likely to collide with concave surface 15 than the gas-phase refrigerant. As a result, in accumulator 10B, gas-liquid separation on concave surface 15 is also further promoted than in accumulator 10.

Accumulator 10B may be configured basically similarly to accumulator 10A according to the second embodiment, and accumulator 10B may be different from accumulator 10A in that inflow pipe 11 includes bent pipe portion 11C extending along concave surface 15 in container 13. Namely, concave surface 15 of accumulator 10B may be formed helically.

### Fourth Embodiment

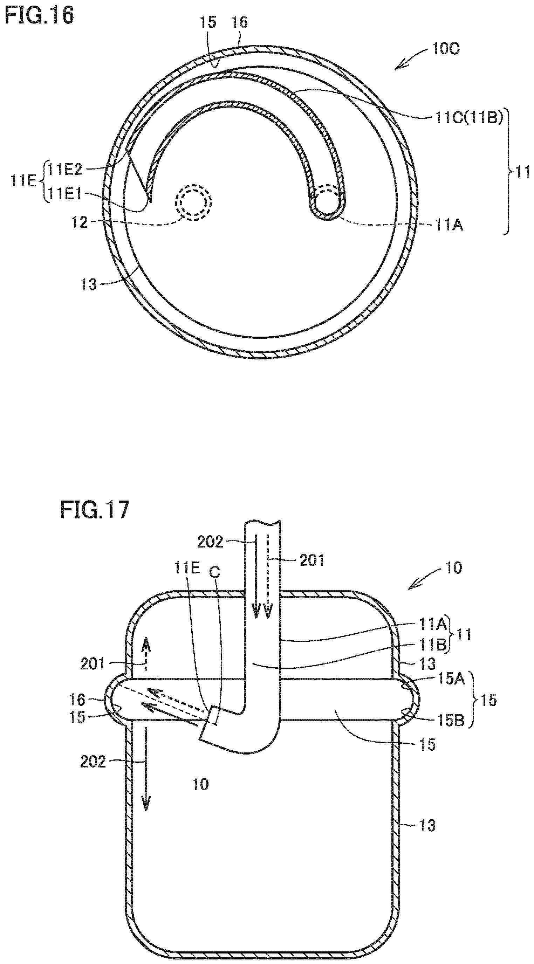

As shown in Figs. 15 and 16, an accumulator 10C according to a fourth embodiment is configured basically similarly to accumulator 10B according to the third embodiment. However, accumulator 10C according to the fourth embodiment is different from accumulator 10B in that first opening end 11E is inclined toward the concave surface 15 side with respect to the radial direction of container 13, when viewed from the vertical direction.

As shown in Figs. 15 and 16, when viewed from the vertical direction, an inner circumferential portion 11E1 of first opening end 11E located on the most inner circumferential side in the above-described radial direction is, for example, disposed to align with the center of outflow pipe 12 in the above-described radial direction. When viewed from the vertical direction, an outer circumferential portion 11E2 of first opening end 11E located on the most outer circumferential side in the above-described radial direction is disposed behind inner circumferential portion 11E1 in the circumferential direction. When viewed from the vertical direction, an angle formed by first opening end 11E and an outer circumferential surface of bent pipe portion 11C is an obtuse angle. When viewed from the vertical direction, an angle formed by first opening end 11E and an inner circumferential surface of bent pipe portion 11C is an acute angle.

Since accumulator 10C is configured basically similarly to accumulator 10B, accumulator 10C can produce an effect similar to that of accumulator 10B.

In accumulator 10C, first opening end 11E is inclined toward the concave surface 15 side with respect to the radial direction of container 13, when viewed from the vertical direction. Therefore, in accumulator 10C, inner circumferential portion 11E1 can suppress scattering of the droplets to the inside of inner circumferential portion 11E1, even when the liquid-phase refrigerant having flown out from above-described outer circumferential portion 11E2 collides with concave surface 15 and scatters. As a result, in accumulator 10C, gas-liquid separation on concave surface 15 is also further promoted than in accumulator 10B.

Accumulator 10C may be configured basically similarly to accumulator 10A according to the second embodiment, and accumulator 10C may be different from accumulator 10A in that inflow pipe 11 includes bent pipe portion 11C extending along concave surface 15 in container 13. Namely, concave surface 15 of accumulator 10C may be formed helically.

### <Modification>

Although the imaginary straight line passing through the center of first opening end 11E and extending along the direction perpendicular to first opening end 11E is along the horizontal direction in each of accumulators 10 to 10C according to the first to fourth embodiments, the present disclosure is not limited thereto. In each of accumulators 10 to 10C, above-described imaginary straight line C may, for example, be inclined with respect to the horizontal direction. As shown in Fig. 17, first opening end 11E may, for example, face upward with respect to the horizontal direction. In this case, first opening end 11E is, for example, disposed such that imaginary straight line C crosses first inclined surface 15A. First opening end 11E may, for example, face downward with respect to the horizontal direction. In this case, first opening end 11E is, for example, disposed such that imaginary straight line C crosses second inclined surface 15B. In each of accumulators 10B and 10C, bent pipe portion 11C may be formed helically.

Although only one concave surface 15 is formed in each of accumulators 10 to 10C according to the first to fourth embodiments, the present disclosure is not limited thereto. In each of accumulators 10 to 10C, a plurality of concave surfaces 15 may be formed to be spaced apart from each other in the vertical direction. Each concave surface 15 may only be formed as concave surface 15 in any of accumulators 10 to 10C.

Although the embodiments of the present disclosure have been described above, the above-described embodiments can also be modified variously. In addition, the scope of the present disclosure is not limited to the above-described embodiments. The scope of the present disclosure is defined by the terms of the claims and is intended to include any modifications within the scope and meaning equivalent to the terms of the claims.

### REFERENCE SIGNS LIST

10, 10A, 10B, 10C accumulator; 11 inflow pipe; 11A first pipe portion; 11B second pipe portion; 11C bent pipe portion; 11E first opening end; 11E1 inner circumferential portion; 11E2 outer circumferential portion; 12 outflow pipe; 12E second opening end; 13 sealed container; 14 inner circumferential surface; 15 concave surface; 15A first inclined surface; 15B second inclined surface; 15C first portion; 15D second portion; 15E third portion; 16 convex portion; 100 refrigeration cycle apparatus; 101 compressor; 102 four-way valve; 103 outdoor heat exchanger; 104 decompressing apparatus; 105 indoor heat exchanger.

## Claims

1. An accumulator disposed between an evaporator and a suction port of a compressor in a refrigerant circuit of a refrigeration cycle apparatus, the accumulator comprising:
a container;
an inflow pipe having a first opening end disposed in the container, the inflow pipe being a pipe for refrigerant flowing out from the evaporator to flow into the container; and
an outflow pipe having a second opening end disposed in the container, the outflow pipe being a pipe for refrigerant in the container to flow out to the suction port of the compressor,
the container including an inner circumferential surface that extends along a vertical direction and a circumferential direction, and a concave surface that is concave with respect to the inner circumferential surface and extends along the circumferential direction,
a part of the concave surface in the circumferential direction being disposed to face the first opening end.

2. The accumulator according to claim 1, wherein
the concave surface includes:
a first inclined surface extending along the circumferential direction and inclined outward as the first inclined surface extends downward; and
a second inclined surface extending along the circumferential direction and inclined inward as the second inclined surface extends downward,
the first inclined surface is disposed above the second inclined surface, and
a lower end of the first inclined surface is continuous to an upper end of the second inclined surface.

3. The accumulator according to claim 2, wherein
each of cross-sectional shapes of the first inclined surface and the second inclined surface that are perpendicular to the circumferential direction has an arc shape.

4. The accumulator according to any one of claims 1 to 3, wherein
the second opening end is disposed above the concave surface.

5. The accumulator according to any one of claims 1 to 4, wherein
the concave surface is formed helically.

6. The accumulator according to any one of claims 1 to 5, wherein
the inflow pipe includes a bent pipe portion extending along the concave surface in the container, and
the bent pipe portion has the first opening end.

7. The accumulator according to claim 6, wherein
the first opening end is inclined toward the concave surface side with respect to a radial direction of the container, when viewed from the vertical direction.

8. The accumulator according to any one of claims 1 to 7, wherein
the concave surface is disposed above a center of the inner circumferential surface in the vertical direction.

9. The accumulator according to any one of claims 1 to 8, wherein
a width of the concave surface in the vertical direction is wider than a maximum width of the first opening end.

10. A refrigeration cycle apparatus comprising:
the compressor;
the evaporator; and
the accumulator as recited in any one of claims 1 to 9.
